(19) Europäisches Patentamt / European Patent Office / Office européen des brevets

(11) **EP 3 116 151 B1**

(12) **EUROPEAN PATENT SPECIFICATION**

(45) Date of publication and mention
of the grant of the patent:
**28.07.2021 Bulletin 2021/30**

(21) Application number: **15758479.8**

(22) Date of filing: **27.02.2015**

(51) Int Cl.:
**H04J 11/00** *(2006.01)*   **H04J 99/00** *(2009.01)*
**H04L 27/01** *(2006.01)*   **H04L 25/03** *(2006.01)*
**H04L 27/34** *(2006.01)*

(86) International application number:
**PCT/JP2015/055909**

(87) International publication number:
**WO 2015/133404 (11.09.2015 Gazette 2015/36)**

(54) **USER TERMINAL, RADIO BASE STATION, RADIO COMMUNICATION METHOD, AND RADIO COMMUNICATION SYSTEM**

BENUTZERENDGERÄT, FUNKBASISSTATION, FUNKKOMMUNIKATIONSVERFAHREN UND FUNKKOMMUNIKATIONSSYSTEM

TERMINAL UTILISATEUR, STATION DE BASE RADIO, PROCÉDÉ DE COMMUNICATION RADIO ET SYSTÈME DE COMMUNICATION RADIO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.03.2014 JP 2014041753**

(43) Date of publication of application:
**11.01.2017 Bulletin 2017/02**

(73) Proprietor: **NTT DOCOMO, INC.**
**Chiyoda-ku**
**Tokyo 100-6150 (JP)**

(72) Inventors:
• **SAWAHASHI, Mamoru**
  **Tokyo 158-8557 (JP)**
• **KAWAMURA, Teruo**
  **Tokyo 100-6150 (JP)**
• **KISHIYAMA, Yoshihisa**
  **Tokyo 100-6150 (JP)**

(74) Representative: **Hoffmann Eitle**
**Patent- und Rechtsanwälte PartmbB**
**Arabellastraße 30**
**81925 München (DE)**

(56) References cited:
**JP-A- 2012 060 407**

• **DEEPAK DASALUKUNTE ET AL: "Multicarrier Faster-Than-Nyquist Transceivers: Hardware Architecture and Performance Analysis", IEEE TRANSACTIONS ON CIRCUITS AND SYSTEMS I: REGULAR PAPERS, IEEE, US, vol. 58, no. 4, 1 April 2011 (2011-04-01), pages 827-838, XP011352197, ISSN: 1549-8328, DOI: 10.1109/TCSI.2010.2089549**
• **SHINYA SUGIURA: "Frequency-Domain Equalization of Faster-than-Nyquist Signaling", IEEE WIRELESS COMMUNICATIONS LETTERS, vol. 2, no. 5, 1 October 2013 (2013-10-01), pages 555-558, XP055200110, ISSN: 2162-2337, DOI: 10.1109/WCL.2013.072313.130408**
• **WENJIN WANG ET AL.: 'Offset Modulated Single-Carrier FDMA with Flexible User Bandwidth' GLOBAL COMMUNICATIONS CONFERENCE (GLOBECOM), 2012 IEEE pages 5004 - 5009, XP032375470**
• **SHUHEI HOSHIBA ET AL.: 'Basic BIER Study of Faster-than-Nyquist for OFDM/OQAM in Multipath Fading Channel' IEICE TECHNICAL REPORT vol. 113, no. 386, 16 January 2014, pages 187 - 192, XP055358030**
• **None**

**Description**

Technical Field

The present invention relates to a user terminal, a radio base station, a radio communication method and a radio communication system that are applicable to a next-generation communication system.

Background Art

In the UMTS (Universal Mobile Telecommunications System) network, the specifications of long term evolution (LTE) have been drafted for the purpose of further increasing high speed data rates, providing lower delays and so on (see non-patent literature 1). In LTE, as multiple-access schemes, a scheme that is based on OFDMA (Orthogonal Frequency Division Multiple Access) is used in downlink channel s (downlink), and a scheme that is based on SC-FDMA (Single Carrier Frequency Division Multiple Access) is used in uplink channel s (uplink).

Citation List

Non-Patent Literature

Non-Patent Literature 1: 3GPP TS 36.300 "Evolved Universal Terrestrial Radio Access (E-UTRA) and Evolved Universal Terrestrial Radio Access Network (E-UTRAN); Overall Description; Stage 2"
In Multicarrier Faster-Than-Nyquist Transceivers: Hardware Architecture and Performance Analysis, Deepak Dasalukunte, Fredrik Rusek and Viktor Owall, FASTER-THAN-NYQUIST (FTN) signaling is a method of improving bandwidth efficiency of conventional orthogonal modulation schemes. A signaling system is said to be faster-than-Nyquist if the pulses appear at a rate beyond the allowed Nyquist condition for ISI-free transmission. As a result, there is induced interference in both time and frequency, generally referred to as intersymbol (ISI) and intercarrier interference (ICI). Today bandwidth is a premium resource compared to the amount of processing complexity that is at disposal in the state-of-the-art silicon technology. Information symbols are assumed to be independent and identically distributed (i.i.d.) with unit power and the power spectral density of additive white Gaussian noise (AWGN) is $N_0/2$. The data symbols are transmitted using Gaussian pulses g(t) as they have excellent time-frequency localization property. The modulation type chosen is offset-QAM (OQAM) as it allows the use of pulse shaping filters resulting in transmission at high data rates through wireless channels. The transmitted signal in an FTN system using Gaussian pulses and OQAM modulation is written as:

$$s(t) = \sum_{\ell=-\infty}^{\infty} \sum_{k=0}^{K-1} i^{k+\ell} x_{k,\ell} \cdot g\left(t - \ell T_\Delta \frac{T}{2}\right) e^{i2\pi \frac{F_\Delta}{T} kt} \quad (1)$$

where $k, l$ refer to the sub-carrier and time indices, respectively, $T_\Delta(T/2)$ is the symbol period between two real valued data symbols $(x_{k,l})$, and $F_\Delta/T$ is the sub-carrier spacing. For orthogonal multicarrier modulation (MCM), $T_\Delta F_\Delta = 1$ and FTN signaling refers to $T_\Delta F_\Delta < 1$. Thus, $T_\Delta$ and $F_\Delta$ can be viewed as compression factors of time and frequency, respectively. Although the product $T_\Delta F_\Delta$ specify the total time-bandwidth consumption of the system, the actual values of $T_\Delta$ and $F_\Delta$ are important. The orthogonal and FTN symbols appear in the time-frequency grid of a multicarrier system.

Summary of Invention

Technical Problem

In LTE systems, techniques for achieving further improvement of cell throughput are under study. For example, studies are in progress on spatial multiplexing (SDM: Spatial Division Multiplexing) based on MIMO (Multiple Input Multiple Output), frequency multiplexing (FDM: Frequency Division Multiplexing) based on carrier aggregation, and so on.
However, for the uplink, further improvement of throughput is in demand.
The present invention has been made in view of the above, and it is therefore an object of the present invention to provide a user terminal, a radio base station, a radio communication method and a radio communication system that can improve uplink throughput.

Solution to Problem

The present invention provides a user terminal as set out in claim 1, a radio base station as set out in claim 4, and a radio communication method as set out in claim 8.

Advantageous Effects of Invention

According to the present invention, it is possible to improve uplink throughput.

Brief Description of Drawings

FIG. 1 is a diagram to show an example of a principle functional structure pertaining to conventional SC-FDMA signal transmission in a user terminal;
FIG. 2 is a diagram to show an example of a principle functional structure pertaining to conventional SC-FDMA signal transmission in a radio base station;
FIGs. 3 provide diagrams to explain signal communication at or below a Nyquist rate and signal communication in FTN;
FIG. 4 is a conceptual diagram to explain OFDM symbols and FTN symbols;
FIG. 5 is a diagram to explain characteristics of FTN signal generation methods;
FIG. 6 is a diagram to explain an example of an arrangement of OFDM/OQAM signal points;
FIG. 7 is a diagram to show an example of a DFT-precoded OFDM transmission processing section to use block-processing FTN according to the present embodiment;
FIG. 8 is a diagram to show an example of a time response of an IOTA filter;
FIG. 9 is a diagram to show an example of a DFT-precoded OFDM reception processing section to use block-processing FTN according to the present embodiment;
FIG. 10 is a schematic diagram to show an example of a radio communication system according to an embodiment of the present embodiment;
FIG. 11 is a diagram to explain an overall structure of a radio communication system according to an embodiment of the present invention;
FIG. 12 is a diagram to explain a functional structure of a radio base station according to an embodiment of the present invention;
FIG. 13 is a diagram to explain an overall structure of a user terminal according to an embodiment of the present invention;
FIG. 14 is a diagram to explain a functional structure of a user terminal according to an embodiment of the present invention; and
FIG. 15 is a conceptual diagram of a method of applying FTN to blocked symbols in single-carrier FDMA.

Description of Embodiments

Now, an embodiment of the present invention will be described below in detail with reference to the accompanying drawings.
In the uplink of LTE systems, SC-FDMA is employed. In comparison with multi-carrier schemes such as OFDMA, SC-FDMA can reduce the peak-to-average power ratio (PAPR).
As for the method of generating SC-FDMA signals in the frequency domain, DFT (Discrete Fourier Transform)-precoded OFDM is used. DFT-precoded OFDM is also referred to as "DFT-spread OFDM." DFT-precoded OFDM makes channel allocation (subcarrier mapping) in frequency-domain processes easy. Also, the commonality of processes with downlink OFDMA is high, so that, for example, the same subcarrier intervals as in OFDMA can be achieved.

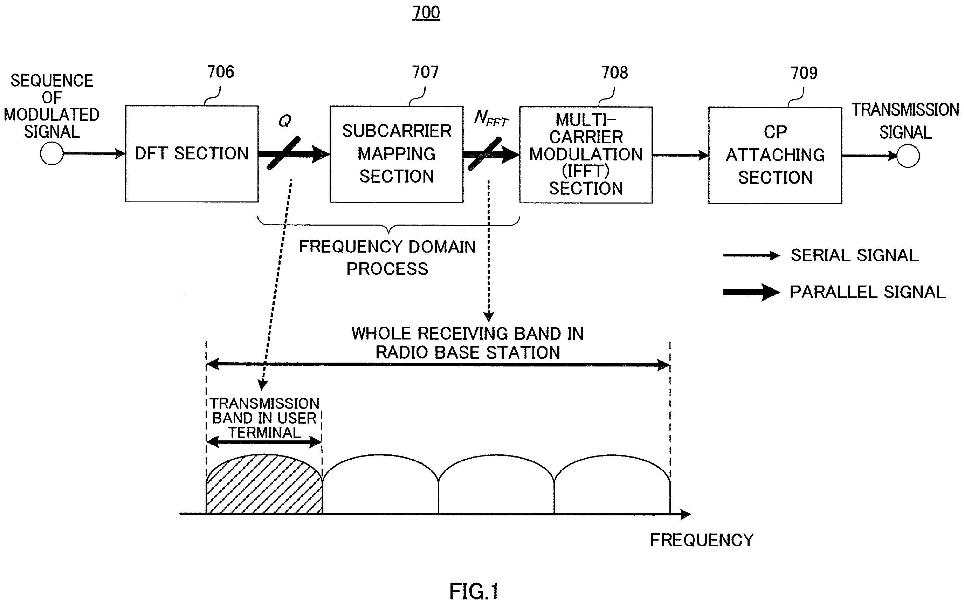

FIG. 1 shows an example of a principle functional structure pertaining to conventional SC-FDMA signal transmission in a user terminal. An SC-FDMA transmission processing section 700 at least has a DFT section 706, a subcarrier mapping section 707, a multi-carrier modulation (IFFT) section 708 and a CP attaching section 709.
The DFT section 706 converts time domain signals into frequency domain signals by performing a serial/parallel conversion of a plurality of samples of modulated symbols and performing a DFT process, and outputs the resulting signals to the subcarrier mapping section 707. The size of this DFT (for example, Q) is equivalent to the bandwidth of the signal transmitted from each separate user terminal.
The subcarrier mapping section 707 generates a sequence, in which information symbols after the DFT process, output from the DFT section 706, are mapped to the frequency band that is allocated to the subject user terminal, and in which 0 signals are allocated to the other frequency bands, and outputs this sequence to the IFFT section 708. Note that inserting 0 signals in the frequency domain in a continuous manner provides localized FDMA signals, and inserting 0 signals in a discrete manner provides distributed FDMA signals.

The IFFT section 708 generates a time domain signal by applying an IFFT process to the sequence output from the subcarrier mapping section 707, and outputs the resulting signal to the CP attaching section 709. This size of this IFFT (for example, $N_{FFT}$) is equivalent to the whole received signal bandwidth in a radio base station.

The CP attaching section 709 attaches CPs to the signal output from the IFFT section 708, on a per symbol basis, and outputs the resulting transmission signal. Note that an additional filtering process may be applied to the transmission signal.

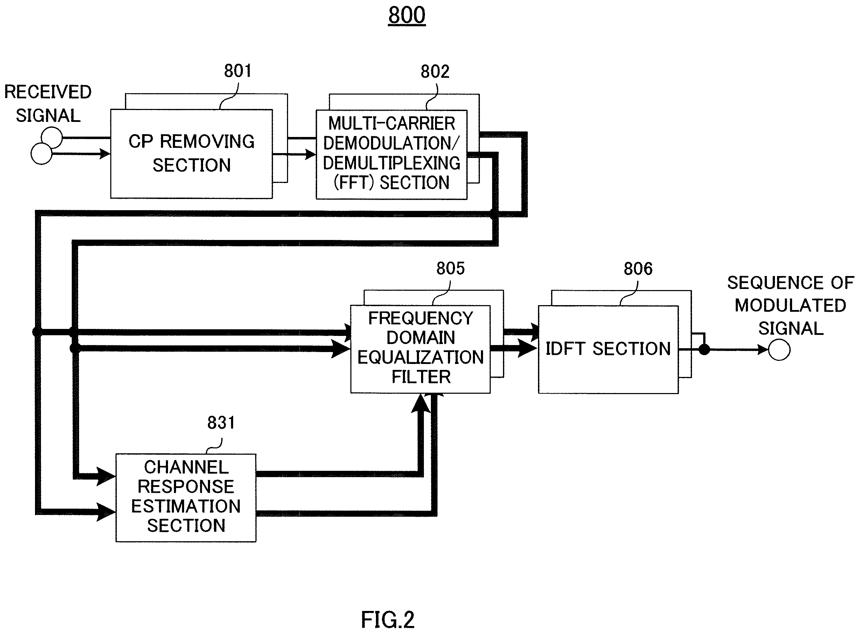

FIG. 2 shows an example of a principle functional structure pertaining to conventional SC-FDMA signal transmission in a radio base station. The SC-FDMA reception processing section 800 at least has a CP removing section 801, a multi-carrier demodulation/demultiplexing (FFT) section 802, a frequency domain equalization filter 805, an IDFT section 806 and a channel response estimation section 831. Note that it is equally possible to employ a structure in which more than one of every section is provided so that parallel processing can be executed. For example, in FIG. 2, the CP removing section 801 and/or others are capable of parallel processing.

The CP removing section 801 removes the CPs from a signal that is received as input, and outputs the result to the FFT section 802. Note that an inverse filtering process may be applied to the receiving signal as well.

The FFT section 802 converts time domain signals into the frequency domain by applying FFT-based multi-carrier demodulation/demultiplexing, extracts each user terminal's signal, and outputs the symbol in each subcarrier location in SC-FDMA to the frequency domain equalization filter 805 and the channel response estimation section 831.

The channel response estimation section 831 multiplies the frequency domain signals of reference signals output from the FFT section 802 by the complex conjugates of the modulation components of the reference signals that are known in the receiver (modulation phase and amplitude), on a per subcarrier basis, thereby determining each subcarrier's channel response, and outputting each subcarrier's channel response estimation value to the frequency domain equalization filter 805.

For each user terminal's signal output from the FFT section 802, the frequency domain equalization filter 805 performs a frequency domain equalization (FDE: Frequency Domain Equalizer) process in order to compensate for the distortion of the waveform having been subjected to the impact of multipath interference, and outputs the resulting signal to the IDFT section 806. For the FDE process, interference from other signals is suppressed on a per signal basis.

Although the linear minimum mean-square error (LMMSE) algorithm based on received signals is used for the method of generating FDE equalization weights, this is by no means limiting. Also, the channel response estimation results input from the channel response estimation section 831 are used in the FDE process.

The IDFT section 806 converts the frequency domain signals, output from the frequency domain equalization filter 805, into time domain signals, by way of an inverse discrete Fourier transform (IDFT).

Now, in radio communication systems, there is a demand for a further increase of cell throughput (the total throughput of all user terminals in a cell). The maximum throughput per user terminal depends primarily on the scheduling method (range) which the radio base station applies to each user terminal. In LTE systems, various throughput-improving techniques are under study.

MIMO (Multiple Input Multiple Output)-based spatial multiplexing (SDM: Spatial Division Multiplexing) is one of the most promising techniques to improve throughput and spectral efficiency in LTE systems. MIMO SDM refers to a scheme of spatially multiplexing and communicating signals (streams) by using a plurality of transmitting/receiving antennas. For example, LTE (Rel. 8 LTE) can achieve a peak data rate of 300 Mbps or higher by means of MIMO SDM with maximum four antennas. Also, in LTE-A (Rel. 10 LTE), a peak data rate of 1 Gbps or higher can be achieved by means of single-user/multi-user MIMO SDM with maximum eight antennas.

Also, in LTE systems, inter-base station coordinated (CoMP: Coordinated Multi-Point) transmission/reception is also under study. In CoMP transmission/reception, a plurality of transmitting/receiving points coordinate and transmit/receive signals to/from user terminals. That is, by using radio resources (time, frequency and power resources and/or the like) of multiple nodes (cell sites), it becomes possible to improve the throughput of, in particular, cell-edge user terminals. Nevertheless, since a plurality of cells' radio resources are used for one user terminal, it is necessary to consider the tradeoff with cell throughput, and, furthermore, rely significantly on fast scheduling between cells.

To achieve an increased peak data rate, it is effective to multiplex physical channels densely. As to how to provide physical channels in a high density, approaches may be taken in the spatial direction, the frequency direction, the time direction and so on.

To provide radio resources densely in the spatial direction, the antenna space or the signal space has to be expanded. The antenna space can be expanded by increasing the number of antennas in above-described MIMO multiplexing. For example, although MIMO SDM with maximum eight antennas is employed in LTE-A, it is possible to increase the number of antennas even more (for example, to 24 to 36). Also, it may be equally possible to introduce polarized antennas for the antennas, and apply vertically polarized waves and horizontally polarized waves to the signals to transmit and receive.

On the other hand, the signal space can be expanded by increasing the M-ary modulation value. For example, although LTE-A supports 64QAM at a maximum, the signal space can be expanded even more by increasing the M-ary modulation value (for example, by employing 256QAM, 512QAM, etc.).

To provide radio resources densely in the frequency direction, it may be possible to use a non-orthogonal multiple access (NOMA) scheme. In NOMA, signals for a plurality of user terminals are non-orthogonal-multiplexed over the same radio resource by, for example, changing transmission power depending on channel gain (for example, the RSRP (Reference Signal Received Power)), path loss and so on. Consequently, unlike orthogonal multiplexing schemes such as OFDMA, interference may be produced between subcarriers (carrier waves) (also referred to as "inter-carrier interference" (ICI)).

Note that, in the frequency direction, the data rate can be improved by increasing the radio resources. For example, a plurality of a frequency bands can be bundled and used by means of spectrum aggregation techniques such as carrier aggregation, dual connectivity and so on.

Still, as for the uplink, there is a demand for further improvement of throughput.

In order to solve this problem, the present inventors have come up with the idea of multiplexing symbols over SC-FDMA signals at a symbol rate faster than the Nyquist rate in a given time region. To be more specific, the present inventors have come up with the idea of generating SC-FDMA signals by blocking single-carrier FDMA symbols, compressing and multiplexing the symbol blocks in the time axis direction by allowing inter-symbol interference (ISI), re-blocking the information symbol blocks, which are compressed in the time axis direction, in the block length before the compression, converting the re-blocked units into frequency domain signals by way of a DFT, and mapping the frequency domain signals to frequency bands allocated in the frequency domain.

Assuming that the above-described symbol blocks, acquired by blocking single-carrier FDMA symbols, are symbols in OFDMA, this is equivalent to multiplexing OFDMA symbols at a faster rate than the Nyquist rate by allowing inter-symbol interference. That is, inter-block interference (which is inter-symbol interference if seen from the information symbols in the blocks) is allowed between symbol blocks in SC-FDMA (also referred to as "SC-FDMA symbols"), and these symbol blocks (SC-FDMA symbols) are multiplexed at a faster rate than the Nyquist rate.

The Nyquist rate refers to the uppermost symbol rate at which symbols communicated in a finite band (for example, the LTE system band) can be decoded uniquely. Multiplexing of symbols at a faster symbol rate than the Nyquist rate is referred to as "FTN" (Faster Than Nyquist). According to FTN, radio resources can be provided in a high density in the time and/or frequency direction.

Existing mobile communication schemes (orthogonal multiple access) are configured so that interference between information symbols (also referred to as "inter-symbol interference" (ISI)) and ICI are prevented by multiplexing information symbols over resources that are orthogonal in the time and frequency domains at a rate equal to or lower than the Nyquist rate. Meanwhile, since communication schemes to employ FTN become non-orthogonal multiple access schemes and the number of information symbols per time can be increased in comparison with orthogonal multiple access, these communication schemes still suffer the impact of ISI (interference in the time domain) and ICI (interference in the frequency domain). Note that the information symbols refer to symbols that are provided by modulating predetermined bit sequences, and include data symbols, control information symbols and so on.

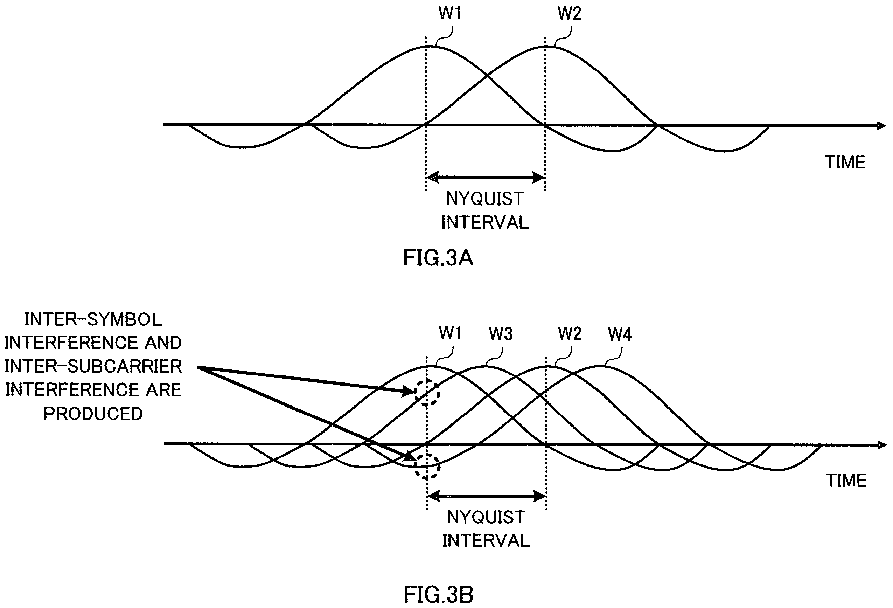

As noted earlier, symbol blocks that are acquired by blocking single-carrier FDMA symbols are equivalent to OFDMA symbols in OFDMA. Consequently, in the following description, FTN will be described in the context of OFDMA, for ease of description. FIGs. 3 provide diagrams to explain signal communication at or below the Nyquist rate, and signal communication in FTN. In the event of single-carrier FDMA, symbol block waveforms, in which symbols are blocked, are shown.

The waveforms W1 and W2 in FIG. 3A represent symbols that are multiplexed at a rate equal to or lower than the Nyquist rate (for example, multiplexed at Nyquist intervals). If each waveform is sampled at the point in time where each waveform shows the highest intensity, it is possible, in effect, to disregard the intensity of the other signal. On the other hand, the waveforms W1 to W4 in FIG. 3B represent symbols that are multiplexed in FTN (for example, multiplexed at 1/2 intervals of the Nyquist interval). In this case, in the sampling time of W1 (for example, the time where the signal intensity is the highest), the symbols of W3 and W4 produce ISI and/or ICI.

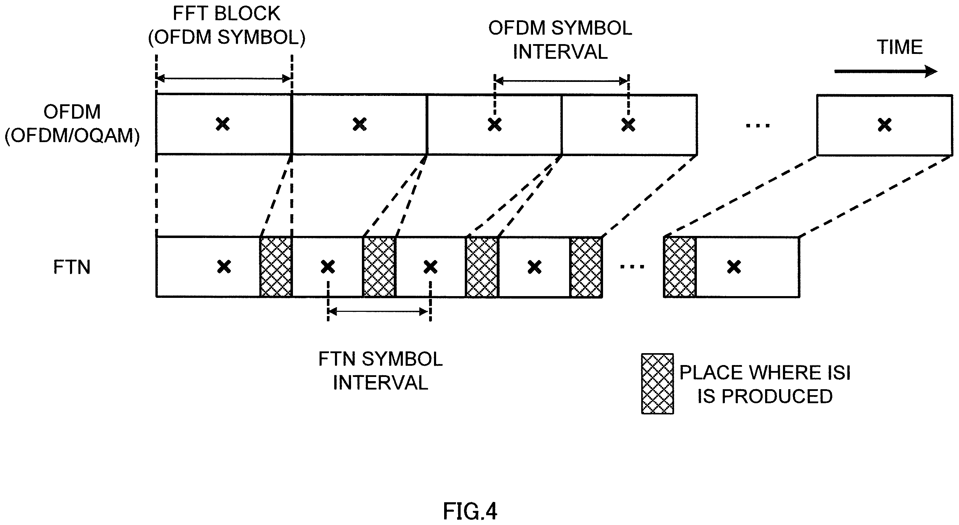

The principles of FTN will be described using an example of OFDM. FIG. 4 is a conceptual diagram of OFDM symbols and FTN symbols. Here, the FTN symbols are symbols multiplexed at a symbol rate faster than the Nyquist rate. Note that FIG. 4 shows a case where no cyclic prefix (CP) is assigned to each symbol.

In the event of OFDM, the OFDM symbol duration is equal to the length of FFT blocks, and also equal to the OFDM symbol interval as well. Consequently, if "multipath" of communication paths is not taken into account, no ISI is produced. Also, basically, ICI is not produced either.

In the event of FTN, although the FTN symbol duration is equal to the length of FFT blocks, the FTN symbol interval is shorter than the OFDM symbol interval. Consequently, ISI is produced. Also, looking at a given symbol period, since ISI is produced before and after, ICI is also produced due to the discontinuity of the carrier frequency.

In view of the above, an interference canceller to cancel ISI and ICI is essential to the FTN receiver for performing the receiving processes of FTN signals. For example, a turbo soft interference canceller (SIC), which performs the iterative process of generating estimated soft decision values of interfering symbols from a linear minimum mean-square error (LMMSE) interference reduction canceller, and the log-likelihood ratio (LLR) of each bit of decoder output, and subtracting these from received signals, is suitable from the perspective of performance and the volume of calculation.

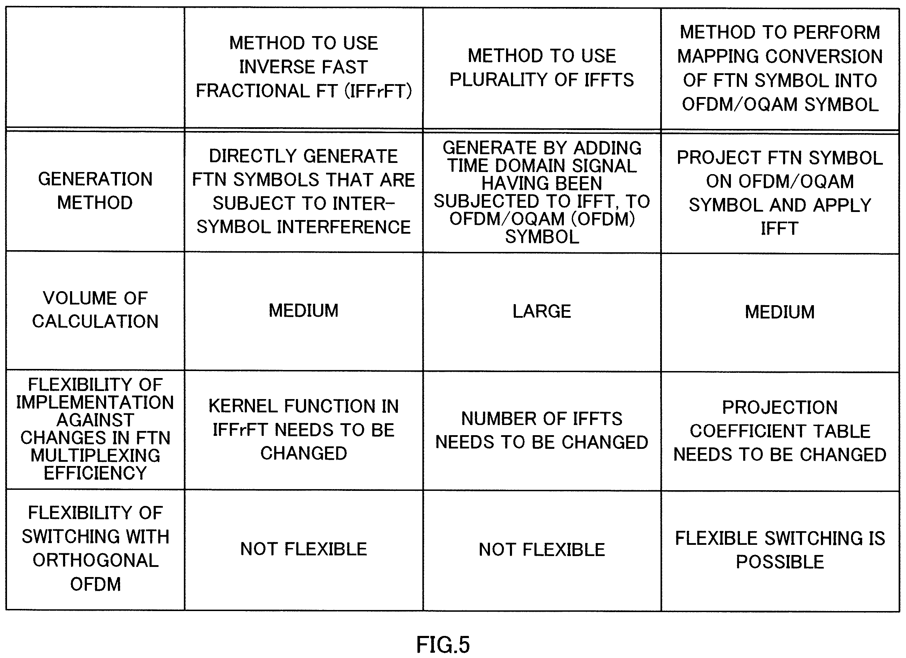

Meanwhile, as for the method of generating FTN signals, for example, the methods illustrated in FIG. 5 are under study. FIG. 5 is a diagram to explain the characteristics of FTN signal generation methods.

In FIG. 5, the method to use the inverse fast fractional Fourier transform (IFFrFT) is a method to directly generate FTN symbols that are subject to inter-symbol interference. Although this generation method can be implemented with one IFFrFT section, since the calculation in the IFFrFT makes use of a kernel function, the volume of calculation is a little complex (medium). To change the efficiency of FTN multiplexing (how much each FTN symbol overlaps one another in time and is multiplexed), the kernel function needs to be changed. Also, since the IFFrFT is used instead of the inverse fast Fourier transform (IFFT), normal OFDM signals and FTN signals cannot be switched flexibly. Note that normal OFDM signals (normal OFDM/OQAM signals) refer to signals in which symbols are multiplexed at a symbol rate equal to or lower than the Nyquist rate.

In FIG. 5, the method to use a plurality of IFFTs is a generation method to add time domain signals that have been subjected to an IFFT, to OFDM/OQAM (or OFDM) symbols. With this generation method, the number of IFFTs increases following an increase in the efficiency of FTN multiplexing, and pre-symbol (subcarrier)-shift processing is required, so that the amount of calculation is comparatively large. To change the efficiency of FTN multiplexing, the number of IFFTs needs to be changed. Also, since a plurality of IFFTs are used, normal OFDM signals and FTN signals cannot be switched in a flexible manner.

Here, OFDM/OQAM (Offset Quadrature Amplitude Modulation) refers to the method of multiplexing (mapping) the in-phase components and quadrature components of OFDM symbols of a symbol cycle (symbol interval) T on the in-phase components alone, at intervals half of the OFDM symbol cycle (=T/2). Consequently, although OFDM/OQAM achieves a symbol rate that is twice that of OFDM, information of one OFDM symbol is communicated using two OFDM/OQAM symbols, so that the information bit rate is the same as that of OFDM.

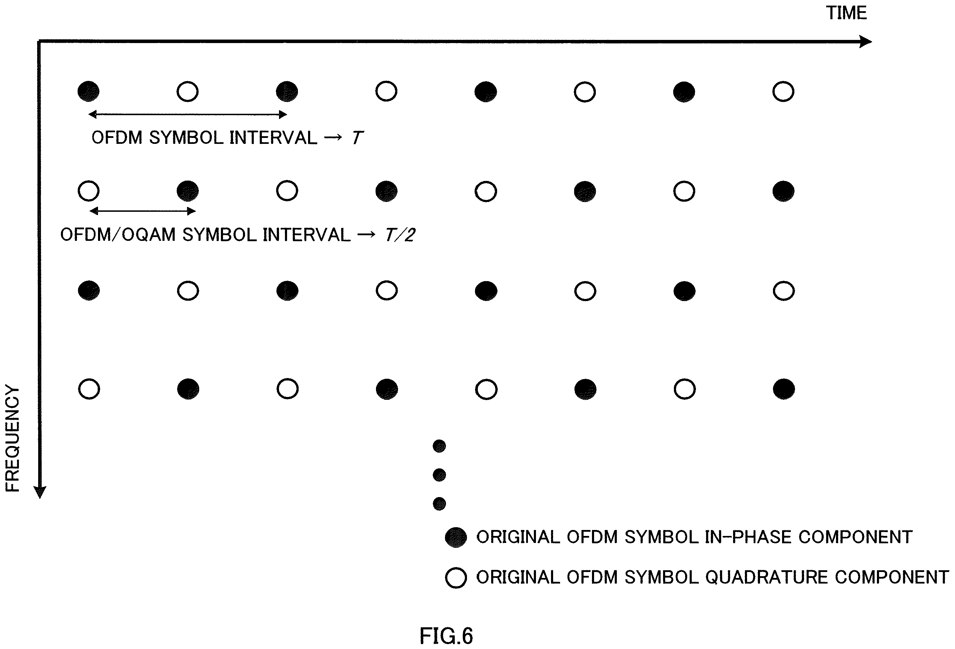

FIG. 6 is a diagram to explain an example of an arrangement of OFDM/OQAM signal points. FIG. 6 shows frequency and time resources, and, furthermore, shows in-phase components that are arranged at intervals (=T/2) half the OFDM symbol cycle T (OFDM symbol interval). FIG. 6 shows a method of mapping the original in-phase components (black circles) and quadrature components (white circles) of OFDM symbols to the in-phase components of OFDM/OQAM symbols, alternately.

Also, in FIG. 5, the method of performing mapping-conversion of FTN symbols to OFDM/OQAM symbols is a method of projecting FTN symbols on OFDM/OQAM symbols and applying an IFFT. With this generation method, the FTN mapping/demapping process increases following an increase in the efficiency of FTN multiplexing, so that the volume of calculation is a little complex (medium). To change the efficiency of FTN multiplexing, it is necessary to make changes to the projection coefficient table. Meanwhile, since normal OFDM can be implemented by not employing FTN mapping, normal OFDM signals and FTN signals can be switched in a flexible manner.

Now, as an embodiment of the present invention, DFT-precoded OFDM transmitting/receiving processes to use block-processing FTN will be described. To be more specific, transmitting/receiving processes to block single-carrier FDMA symbols in a predetermined block length (a predetermined number of symbols), apply FTN to the symbol blocks, re-block the symbols blocks, to which FTN has been applied, in the original block length, and use DFT-precoded OFDM.

For ease of description, a case will be described below where the transmission side (FTN transmitter) provided with an FTN transmission processing section 300 transmits SC-FDMA signals, to which FTN is applied, to the receiving side (FTN receiver) provided with an FTN reception processing section 400. For example, a structure may be employed here in which a user terminal is used as the FTN transmitter and a radio base station is used as the FTN receiver. However, the above structure is by no means limiting, as long as the radio communication method includes the steps of implementing processes with the FTN transmission processing section 300 and the FTN reception processing section 400. For example, in the event the radio base station can transmit SC-FDMA signals, a structure may be employed, in which the radio base station has the FTN transmission processing section 300, and the user terminal has the FTN reception processing section 400.

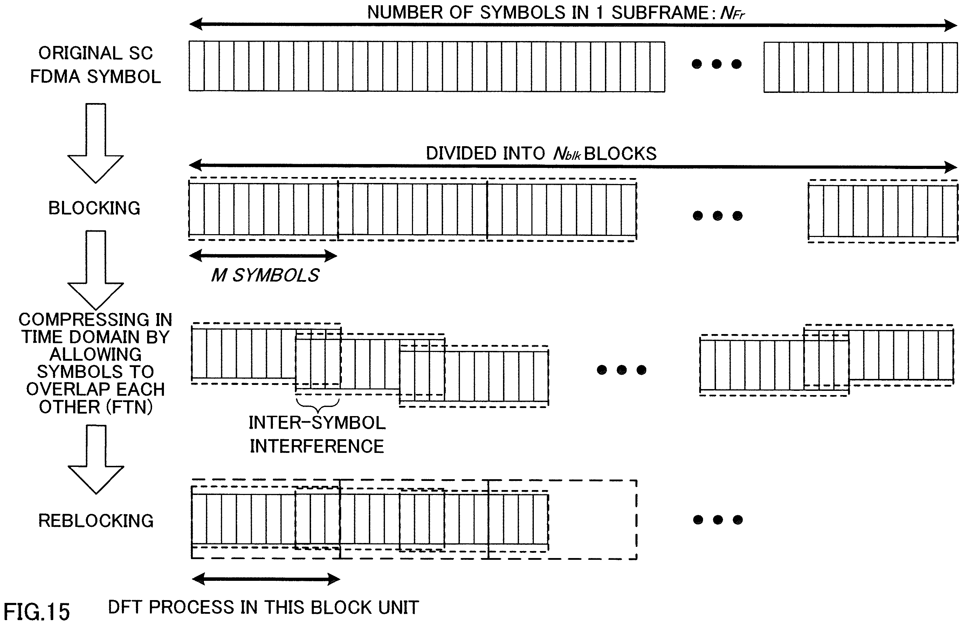

FIG. 15 shows a conceptual diagram of a method of applying FTN to blocked symbols in single-carrier FDMA. Assume that, in the original SC-FDMA frame configuration, $N_{Fr}$ symbols are multiplexed in one frame. $N_{Fr}$ symbol are divided into $N_{blk}$ blocks. The number of symbols per block is $M=N_{Fr}/N_{blk}$. A symbol $m$ ($1 \leq m \leq M$) in a block $n$ ($1 \leq n \leq N_{blk}$) is represented by $S_{n,m}$.

Blocking-FTN is applied to single-carrier FDMA symbols of this frame configuration. Signals of ($N_{blk}+z$) ($z>0$) blocks are multiplexed over subframes. The number of symbols per block is $Mx\{N_{blk}/(N_{blk}+z)\}$. In this case, the efficiency of FTN multiplexing becomes $(N_{blk}+z)/N_{blk}$, which is equivalent to achieving an effect of improving spectral efficiency. A symbol $k$ ($1 \leq k \leq \{(M \times N_{blk})/(N_{blk}+z)\}$) in a block $l$ ($1 \leq l \leq N_{blk}+z$) after the FTN is represented by $S_{l,k}$. By applying FTN, as shown in FIG. 15, inter-block interference (IBI) or inter-symbol interference (ISI) is produced. The process of mapping the FTN symbol $S_{l,k}$ to the location of the symbol $S_{n,m}$ before the FTN process is referred to as FTN mapping.

The symbol after FTN mapping is represented by $\tilde{S}_{n,m}$.

As shown in FIG. 15, when symbol blocks are multiplexed in the time domain, the blocks are multiplexed so that the symbols are synchronized (symbol timing synchronization).

(FTN transmission processing section)

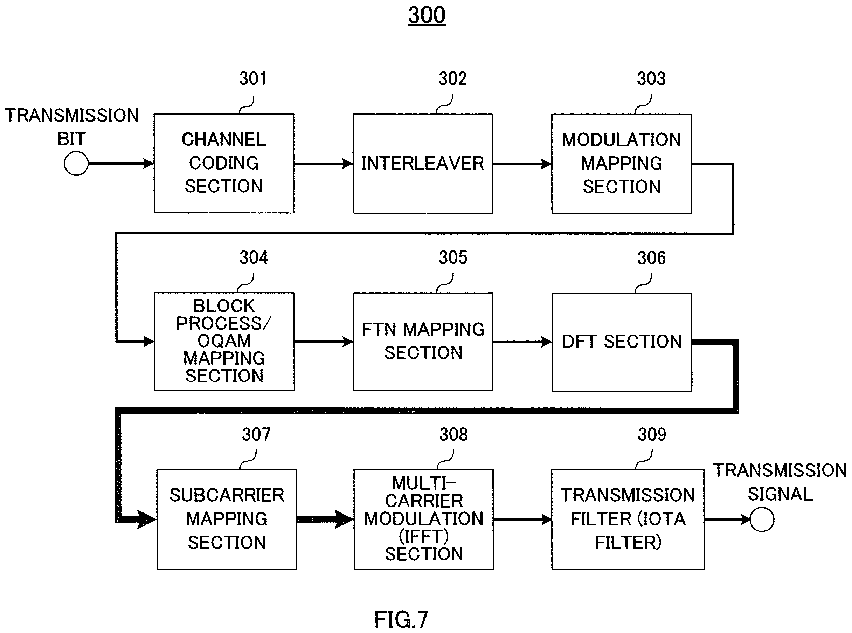

In FIG. 7, an example of a DFT-precoded OFDM transmission processing section to use block-processing FTN according to the present embodiment is shown. The FTN transmission processing section 300 at least has a channel coding section 301, an interleaver 302, a modulation mapping section 303, a block processing/OQAM mapping section 304, an FTN mapping section 305, a DFT section 306, a subcarrier mapping section 307, a multi-carrier modulation (IFFT) section 308, and a transmission filter (IOTA filter) 309. Note that it is equally possible to employ a structure in which more than one of every section is provided so that parallel processing can be executed. Also, a structure may be employed in which a plurality of transmission signals can be transmitted in parallel.

The channel coding section 301 applies error correction coding (channel coding) to the transmission bits that are received as input, and outputs the result to the interleaver 302. For the channel coding, for example, turbo coding, RC/QC-LDPC (Rate-Compatible/Quasi-Cyclic-Low Density Parity-Check) coding and/or the like can be used.

The interleaver 302 applies bit interleaving to the bits having been encoded in the channel coding section 301, in order to avoid producing burst loss, and outputs the result to the modulation mapping section 303.

The modulation mapping section 303 performs modulation mapping (data modulation) of the bits interleaved in the interleaver 302. As for the modulation scheme, for example, digital modulation schemes such as QPSK (Quadrature Phase Shift Keying), 16QAM (Quadrature Amplitude Modulation) and 64QAM can be used. Although QPSK is used with the present embodiment, this is by no means limiting.

Note that the channel coding sections 301 and the modulation mapping section 303 can determine the channel coding rate and the modulation scheme based on channel state information (CSI) that is fed back from the FTN receiver, and perform the channel coding process and the modulation process in accordance with these channel coding rate and modulation scheme.

The block processing/OQAM mapping section 304 blocks input symbols from the modulation mapping section 303. The blocked symbols are subjected to OQAM mapping (OQAM conversion). As noted earlier, assume that the number of symbols per block is $M$. Presuming that the number of bits in a symbol is J, the number of signal points is $2^J$. In OQAM mapping, the M-ary modulation value is increased to make the number of signal points in a symbol $2^{2J}$. Since the number of bits per symbol is doubled, the number of symbols per block can be made M/2 in order to transmit the same number of bits per block. Next, the in-phase and quadrature components of M/2 symbols per block are divided, and mapped only to the in-phase components of M symbols per block, thereby implementing OQAM mapping. The M symbols per block, having been subjected to OQAM mapping, are output to the FTN mapping section 305. With the present embodiment, symbols having undergone OQAM conversion are multiplexed in a high density by FTN by allowing inter-block interference (IBI), and therefore will be referred to as "FTN symbol blocks."

The FTN mapping section 305 multiplexes the FTN symbol blocks input from the block processing/OQAM mapping section 304 in the same time period as that of the $N_{blk}$ blocks before FTN mapping (in $(N_{blk}+z)/N_{blk}$-fold multiplexing). The multiplexed symbols are re-blocked into $N_{blk}$ blocks. This process is referred to as FTN mapping in single-carrier FDMA.

The signals after FTN mapping become $N_{blk}$ blocks, in which M symbols are included per block, as when FTN is not applied. That is, the block length of the signals after FTN mapping is the same as the DFT size in the event of generating single-carrier FDMA signals in the frequency domain. The FTN mapping section 305 outputs the signals after FTN mapping to the DFT section 306.

The DFT section 306 converts the $N_{blk}$ blocks into frequency domain signals of M subcarriers, on a per block basis, through an M-sample DFT. The DFT section 306, the subcarrier mapping section 307 and the IFFT section 308 may be structured the same as the DFT section 706, the subcarrier mapping section 707 and the IFFT section 708 of FIG. 1, and therefore will not be described here.

The transmission filter 309 applies bandwidth limitation, by means of a transmission filter, to the signals converted in the IFFT section 308, and outputs the resulting transmission signals. According to the present embodiment, IOTA (Isotropic Orthogonal Transform Algorithm) filter is used for this transmission filter, but this is by no means limiting.

With the present embodiment, as the above-described orthogonal basis function $\varphi_{m,n}(t)$, an IOTA pulse (IOTA window function) is used, instead of the rectangular window that is used in normal OFDM, in order to improve the locality of the projection of FTN symbol blocks on the basis function. This can be implemented by applying an IOTA filter to the IFFT waveform.

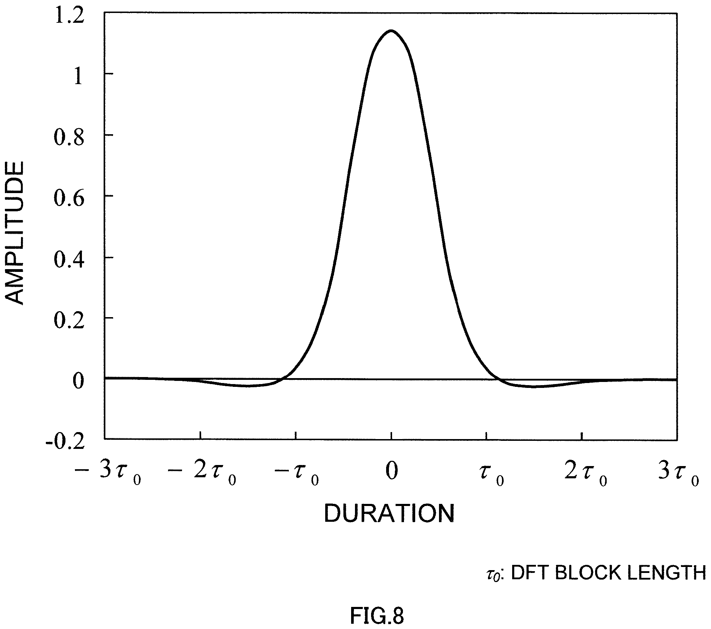

The IOTA filter is basically a Gaussian function, so that a time response and a frequency response of the same shape can be implemented. FIG. 8 is a diagram to show an example of a time response of an IOTA filter. In FIG. 8, $\tau_0$ is the OFDM/OQAM block length. As shown in FIG. 8, the IOTA filter exhibits good convergence performance in the time domain.

(FTN reception processing section)

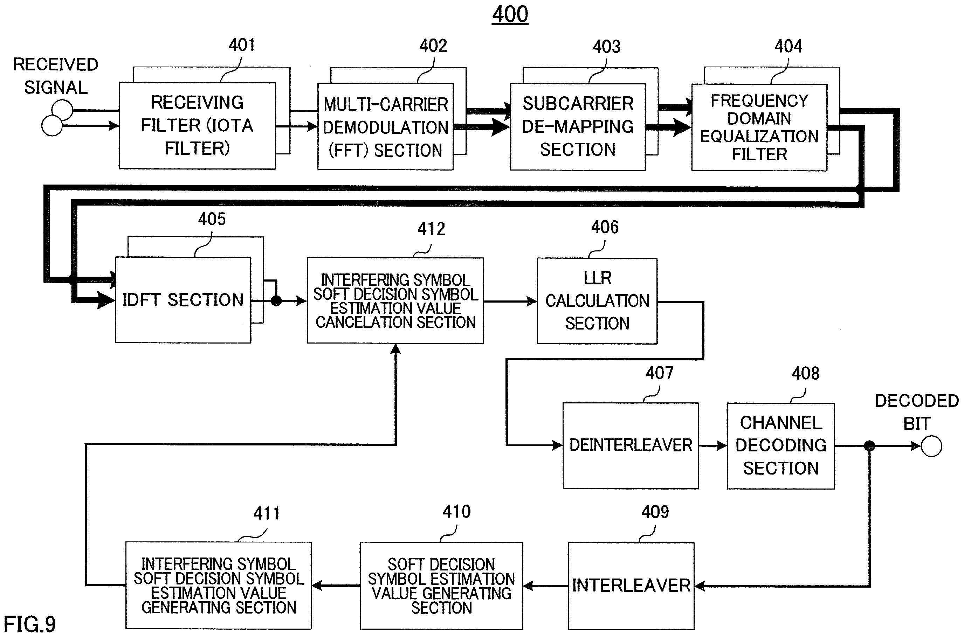

FIG. 9 is a diagram to show an example of a DFT-precoded OFDM reception processing section to use block-processing FTN according to the present embodiment. An FTN reception processing section 400 at least has a receiving filter (IOTA filter) 401, a multi-carrier demodulation (FFT) section 402, a subcarrier demapping section 403, a frequency domain equalization filter 404, an IDFT section 405, an LLR calculation section 406 and a deinterleaver 407, a channel decoding section 408, an interleaver 409, a soft decision symbol estimation value generating section 410, an interfering symbol soft decision symbol estimation value generating section 411 and an interfering symbol soft decision symbol estimation value cancelation section 412. Note that a structure may be employed in which more than one of each section is provided so that parallel processing can be executed. For example, in FIG. 9, the FFT sections 402 and/or others are capable of parallel processing.

Note that the FFT section 402, the frequency domain equalization filter 404 and the IDFT section 405 may be structured the same as the FFT section 802, the frequency domain equalization filter 805 and the IDFT section 806, and therefore description will be omitted. Also, the FTN reception processing section 400 may have a function for estimating channel response like the channel response estimation section 831 of FIG. 2.

The receiving filter 401 performs an IOTA filtering process of a signal that is received as input, and outputs the result to the FFT section 402.

From the output signal of the FFT 402, the desired signal of the allocated frequency band is extracted by the subcarrier demapping section 403.

The distortion of the waveform of the output signal of the subcarrier demapping section 403 due to multipath interference is compensated by the frequency domain equalization filter 404. As for the algorithm for generating equalization weights, generally, the LMMSE algorithm, which can reduce the amplification of noise low, is used.

The frequency domain subcarrier components, equalized in the frequency domain equalization filter 404, are converted into time domain signals in the IDFT section 405.

The LLR calculation section 406 calculates each bit's a-posteriori LLR based on the time domain symbols output from the IDFT section 405. Although it is equally possible to calculate the a-posterioriLLRs of the signals, given by demapping the OQAM mapping and converting into symbols having in-phase components and quadrature components, each bit's a-posteriori LLR can be calculated directly, and easily, from the symbols that are OQAM-mapped. In the initial iterative loop, each symbol that is output from the IDFT section 405 includes inter-symbol interference (ISI).

The LLR of each bit, output from the LLR calculation section 406, is deinterleaved in the deinterleaver 407.

The LLR of each bit, output from the deinterleaver 407, is input in the channel decoding section 408, so that the reliability of the LLRs is improved. In the event of turbo code, max-log-MAP decoding is used often, which can reduce the amount of operation low in comparison to MAP decoding.

The channel decoding section 408 outputs the a-posteriori LLRs of the information bits and the parity bits. The a-posteriori LLRs, output from the channel decoding section 408, are interleaved in the interleaver 409.

The soft decision symbol estimation value generating section 410 generates each symbol's soft decision symbol estimation value, depending on the modulation scheme, by using the a-posteriori LLR of each bit output from the interleaver 409. In this case, soft decision symbol estimation values after OQAM mapping can be generated directly. However, this is by no means limiting. For example, based on the assumption that each bit in a symbol is independent, the soft decision symbol estimation value generating section 410 may generate soft decision symbol estimation values that are suitable to the modulation mapping, by multiplying each symbol replica by the occurrence probability of each bit.

For each OQAM symbol, the interfering symbol soft decision symbol estimation value generating section 411 generates the soft decision symbol estimation value of a symbol that may interfere with this symbol (that is, a symbol that causes ISI, also referred to as an "interfering symbol"). For each symbol of each block, an interfering symbol soft decision symbol estimation value is generated taking into account the overlap of symbols.

In the interfering symbol soft decision symbol estimation value cancelation section 412, every symbol that contains inter-symbol interference, output from the IDFT section 405, is subjected to the process of subtracting the interfering symbol estimation value of each symbol, generated in the interfering symbol soft decision symbol estimation value generating section 411. When interfering symbols are estimated in an ideal manner, inter-symbol interference that is produced due to execution of FTN is completely cancelled from each symbol output from the IDFT section 405. However, interfering symbol estimation error is produced due to channel estimation error, noise-originated LLR error, and so on. Consequently, the process of repeating performing channel decoding and generating and canceling interfering symbol estimation values several times, is performed.

When channel response is estimated using reference signals (RSs) alone, since channel response estimation values are not updated, it is not necessary to update the equalization weights in the frequency domain equalization filter 404. Consequently, the process up to IDFT 405 has only to be performed once, and the process after the IDFT section 405 is executed in an iterative process. Meanwhile, in addition to reference signals, by using decision feedback channel estimation, in which received signals are demodulated using soft decision symbol estimation values generated from the decoded bits (LLRs) and channel response is estimated, the reliability of channel response estimation can be improved, in particular in an environment in which the received SNR is low. When decision feedback channel estimation is used, it is necessary to update the equalization weights in the frequency domain equalization filter 404, so that the iterative process of and after the frequency domain equalization filter 404 is performed.

When the process of subtracting the soft decision symbol estimation values of interfering symbols is applied to all of the information symbols, one round of the iterative process is complete. In the next round of the iterative process, the process after the IDFT section 405 (or the frequency domain equalization filter 404) is applied again to the signals output from the preceding iterative process.

In the final iterative loop by the turbo SIC, the a-posteriori LLR of the max-log-MAP decoder output is subjected to hard decision, thereby reconstructing the transmitting bit sequences (decoding bits). When the number of iterations for a given received signal reaches a predetermined number of times (for example, $N_{itr}$ times), the FTN reception processing section 400 may judge that the loop is the final iteration, and output decoding bits.

As described above, according to the present embodiment, compared to the case of using normal DFT-precoded OFDM, the throughput of SC-FDMA can be improved by means of DFT-precoded OFDM to use block-processing FTN.

(Structure of Radio Communication System)

Now, a structure of a radio communication system according to an embodiment of the present invention will be described below. In this radio communication system, the radio communication method according to the above-described embodiment is used.

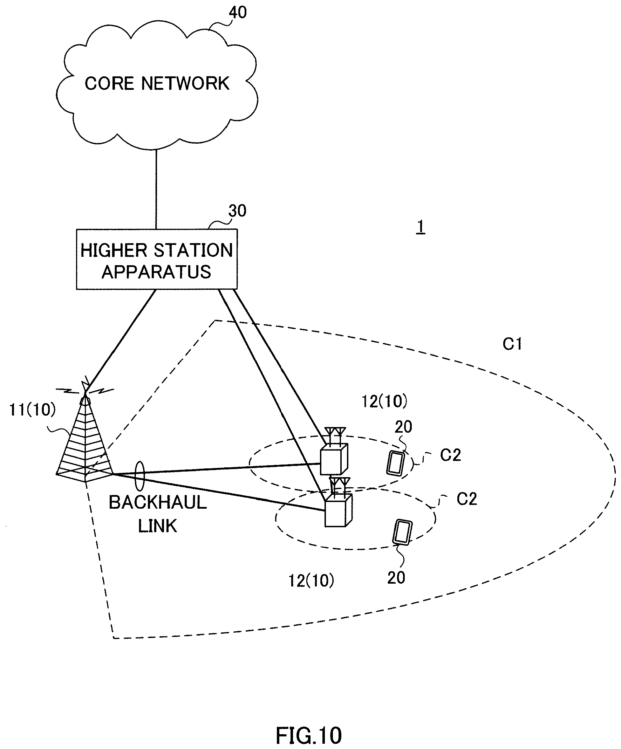

FIG. 10 is a schematic structure diagram to show an example of the radio communication system according to an embodiment of the present invention. As shown in FIG. 10, a radio communication system 1 is comprised of a plurality of radio base stations 10 (11 and 12), and a plurality of user terminals 20 that are present within cells formed by each radio base station 10, and that are configured to be capable of communicating with each radio base station 10. The radio base stations 10 are each connected with a higher station apparatus 30, and are connected to a core network 40 via the higher station apparatus 30.

In FIG. 10, the radio base station 11 is, for example, a macro base station having a relatively wide coverage, and forms a macro cell C1. The radio base stations 12 are, for example, small base stations having local coverages, and form small cells C2. Note that the number of radio base stations 11 and 12 is not limited to that illustrated in FIG. 10. Also, a structure is equally possible in which any of the radio base stations 11 and 12 is not provided.

The macro cell C1 and the small cells C2 may use the same frequency band or may use different frequency bands. Also, the radio base stations 11 and 12 are connected with each other via an inter-base station interface (for example, optical fiber, the X2 interface, etc.).

Note that the macro base station 11 may be referred to as an "eNodeB" (eNB), a "radio base station," a "transmission point," and so on. The small base stations 12 are radio base stations that have local coverages, and may be referred to as "RRHs" (Remote Radio Heads), "pico base stations," "femto base stations," "home eNodeBs," "transmission points," "eNodeBs" (eNBs), and so on.

The user terminals 20 are terminals to support various communication schemes such as LTE, LTE-A and so on, and may include both mobile communication terminals and stationary communication terminals. The user terminals 20 can communicate with other user terminals 20 via the radio base stations 10. Also, the user terminal 20 can each directly communicate (i.e. D2D: Device-to-Device) with other user terminals 20 without involving radio base stations 10. That is, the user terminals 20 may have functions for directly transmitting/receiving device-to-device signals (D2D signals) such as D2D discovery, D2D synchronization and D2D communication signals. Note that, although D2D signals use SC-FDMA (Single Carrier-Frequency Division Multiple Access) as the fundamental signal format, this is by no means limiting.

Note that the higher station apparatus 30 may be, for example, an access gateway apparatus, a radio network controller (RNC), a mobility management entity (MME) and so on, but is by no means limited to these.

In the radio communication system 1, a downlink shared channel (PDSCH: Physical Downlink Shared Channel), which is used by each user terminal 20 on a shared basis, downlink control channels (PDCCH (Physical Downlink Control Channel), EPDCCH (Enhanced Physical Downlink Control Channel), etc.), a broadcast channel (PBCH: Physical Broadcast Channel) and so on are used as downlink channels. User data, higher layer control information and predetermined SIBs (System Information Blocks) as broadcast signals are communicated in the PDSCH. Downlink control information (DCI) such as scheduling information for the PDSCH and the PUSCH is communicated by the PDCCH and the EPDCCH. Also, synchronization signals, MIBs (Master Information Blocks) and so on are communicated by the PBCH.

Also, in the radio communication system 1, an uplink shared channel (PUSCH: Physical Uplink Shared Channel), which is used by each user terminal 20 on a shared basis, an uplink control channel (PUCCH: Physical Uplink Control Channel) and so on are used as uplink channels. User data and higher layer control information are communicated by the PUSCH. Also, downlink radio quality information (CQI: Channel Quality Indicator), uplink control information such as ACKs/NACKs, and so on are communication by the PUCCH. Also, in the radio communication system 1, D2D discovery signals for allowing the user terminals 20 to detect each other may be transmitted using uplink resources.

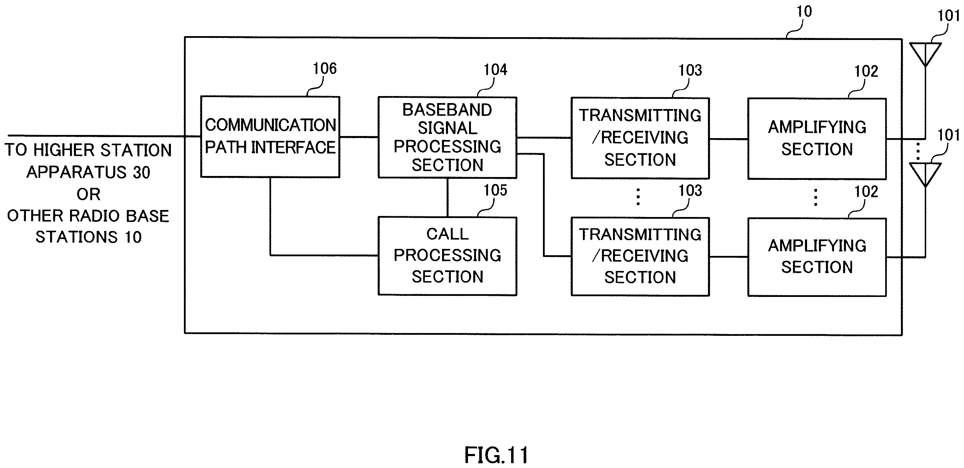

FIG. 11 is a diagram to show an overall structure of a radio base station 10 according to an embodiment of the present invention. The radio base station 10 has a plurality of transmitting/receiving antennas 101 for MIMO communication, amplifying sections 102, transmitting/receiving sections (receiving sections) 103, a baseband signal processing section 104, a call processing section 105 and a communication path interface 106.

User data to be transmitted from the radio base station 10 to a user terminal 20 on the downlink is input from the higher station apparatus 30 to the baseband signal processing section 104, via the communication path interface 106.

In the baseband signal processing section 104, a PDCP layer process, division and coupling of user data, RLC (Radio Link Control) layer transmission processes such as an RLC retransmission control transmission process, MAC (Medium Access Control) retransmission control, including, for example, an HARQ transmission process, scheduling, transport format selection, channel coding, an inverse fast Fourier transform (IFFT) process and a precoding process are performed, and the result is forwarded to each transmitting/receiving section 103. Furthermore, downlink control signals are also subjected to transmission processes such as channel coding and an inverse fast Fourier transform, and transferred to each transmitting/receiving section 103.

Each transmitting/receiving section 103 converts downlink signals, pre-coded and output from the baseband signal processing section 104 on a per antenna basis, into a radio frequency band. Also, the transmitting/receiving sections 103 constitute the transmission section of the present embodiment. The amplifying sections 102 amplify the radio frequency signals having been subjected to frequency conversion, and transmit the signals through the transmitting/receiving antennas 101.

On the other hand, as for uplink signals, radio frequency signals that are received in the transmitting/receiving antennas 101 are each amplified in the amplifying sections 102, converted into baseband signals through frequency conversion in each transmitting/receiving section 103, and input into the baseband signal processing section 104.

In the baseband signal processing section 104, user data that is included in the uplink signals that are input is subjected to an inverse fast Fourier transform (IFFT) process, an inverse discrete Fourier transform (IDFT) process, error correction decoding, a MAC retransmission control receiving process, and RLC layer and PDCP layer receiving processes, and transferred to the higher station apparatus 30 via the transmission path interface 106. The call processing section 105 performs call processing such as setting up and releasing communication channels, manages the state of the radio base station 10 and manages the radio resources.

The interface section 106 transmits and receives signals to and from neighboring radio base stations (backhaul signaling) via an inter-base station interface (for example, optical fiber, the X2 interface, etc.). Alternatively, the interface section 106 transmits and receives signals to and from the higher station apparatus 30 via a predetermined interface.

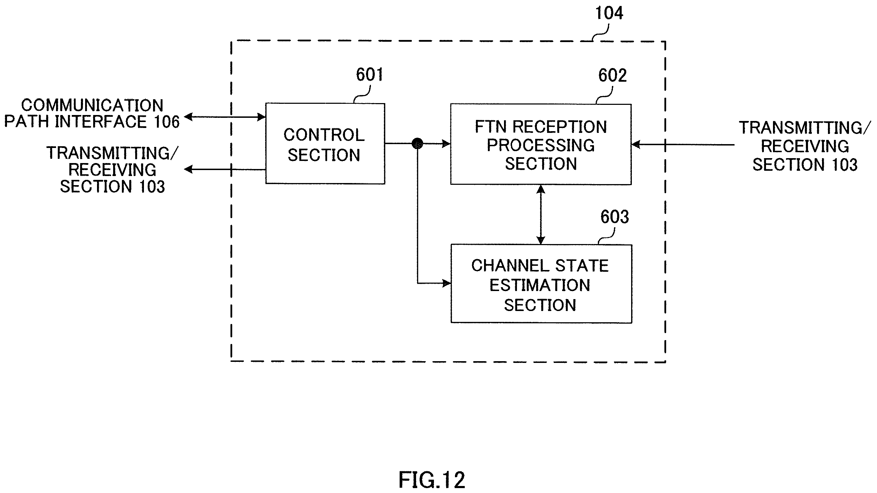

FIG. 12 is a diagram to show a principle functional structure of the baseband signal processing section 104 provided in the radio base station 10 according to an embodiment of the present invention. As shown in FIG. 12, the baseband signal processing section 104 provided in the radio base station 10 is comprised at least of a control section 601, an FTN reception processing section (reception processing section) 602 and a channel state estimation section (channel response estimation section) 603.

The control section 601 controls the scheduling of downlink user data that is transmitted in the PDSCH, downlink control information that is communicated in one or both of the PDCCH and the enhanced PDCCH (EPDCCH), downlink reference signals and so on. Also, the control section 601 also controls the scheduling of RA preambles transmitted from user terminals 20 in the PRACH, uplink data that is communicated in the PUSCH, uplink control information that is communicated in the PUCCH or the PUSCH, and uplink reference signals. Information about the scheduling (allocation control) of downlink signals and uplink signals is reported to user terminals 20 by using downlink control signals (DCI).

The control section 601 controls the allocation of radio resources to downlink signals and uplink signals based on command information from the higher station apparatus 30, acquired via the communication path interface 106, feedback information (for example, CSI) transmitted from each user terminal 20, acquired via the transmitting/receiving sections 103. That is, the control section 601 functions as a scheduler. Note that, when a separate radio base station 10 or the higher station apparatus 30 functions as a supervisory scheduler for a plurality of radio base stations 10, the control section 601 may not be provided with scheduler functions.

The FTN reception processing section 602, converts an SC-FDMA signal, input from the transmitting/receiving section 103, into a DFT-precoded OFDM signal (SC-FDMA signal to which FTN is applied) to use block-processing FTN, in accordance with control by the control section 601, and performs receiving processes (demapping, interference cancellation and so on).

Note that the FTN reception processing section 602 has only to be structured so that information symbols can be acquired by applying receiving processes to an SC-FDMA signal for which block-processing FTN has been used. The FTN reception processing section 400 described in the above embodiment may be used. Also, the FTN reception processing section 602 may be structured to be capable of decoding normal SC-FDMA signals by not applying FTN.

Also, as for the reference signals, the FTN reception processing section 602 outputs the signals after multi-carrier demodulation (FFT) to the channel state estimation section 603.

The channel state estimation section 603 estimates channel states (channel response) based on the reference signals input from the FTN reception processing section 602. Note that, when information about the locations where the reference signals are multiplexed, per transmitting antenna pertaining to a plurality of transmitting antennas, is acquired from the control section 601, each antenna's channel state can be estimated based on this information. The channel state estimation section 603 outputs the channel estimation results to the FTN reception processing section 602.

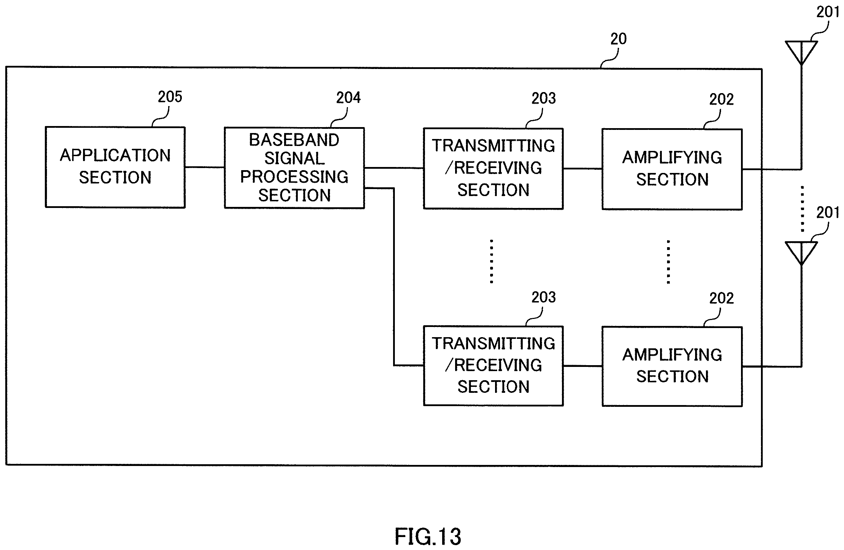

FIG. 13 is a diagram to show an overall structure of a user terminal 20 according to an embodiment of the present invention. As shown in FIG. 13, the user terminal 20 has a plurality of transmitting/receiving antennas 201 for MIMO transmission, amplifying sections 202, transmitting/receiving sections (receiving sections) 203, a baseband signal processing section 204 and an application section 205.

As for downlink data, radio frequency signals that are received in the plurality of transmitting/receiving antennas 201 are each amplified in the amplifying sections 202, and subjected to frequency conversion and converted into the baseband signal in the transmitting/receiving sections 203. This baseband signal is subjected to an FFT process, error correction decoding, a retransmission control receiving process and so on in the baseband signal processing section 204. In this downlink data, downlink user data is transferred to the application section 205. The application section 205 performs processes related to higher layers above the physical layer and the MAC layer, and so on. Furthermore, in the downlink data, broadcast information is also transferred to the application section 205.

Meanwhile, uplink user data is input from the application section 205 to the baseband signal processing section 204. The baseband signal processing section 204 performs a retransmission control transmission process (for example, an HARQ transmission process), channel coding, pre-coding, a discrete Fourier transform (DFT) process, an IFFT process and so on, and the result is forwarded to each transmitting/receiving section 203. The baseband signal that is output from the baseband signal processing section 204 is converted into a radio frequency band in the transmitting/receiving sections 203. After that, the amplifying sections 202 amplify the radio frequency signal having been subjected to frequency conversion, and transmit the resulting signal from the transmitting/receiving antennas 201.

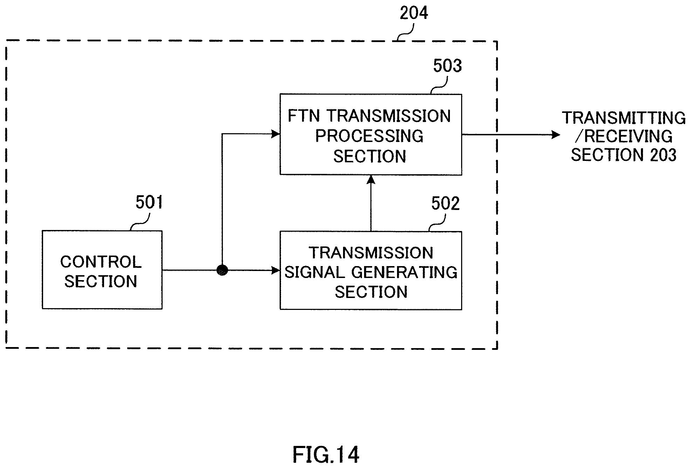

FIG. 14 is a diagram to show a principle functional structure of the baseband signal processing section 204 provided in the user terminal 20 according to an embodiment of the present invention. As shown in FIG. 14, the baseband signal processing section 204 provided in the user terminal 20 is comprised at least of a control section 501, a transmission signal generating section 502 and an FTN transmission processing section (transmission processing section) 503.

Based on downlink control signals (DCI) transmitted from the radio base station 10 or higher layer signaling (for example, RRC signaling, broadcast signal, and so on), the control section 501 controls the transmission signal generating section 502 and the FTN transmission processing section 503 in order to transmit uplink signals.

In accordance with commands from the control section 501, the transmission signal generating section 502 generates uplink control signals, uplink data signals, uplink reference signals and so on, and output these to the FTN transmission processing section 503 as appropriate.

The FTN transmission processing section 503 maps SC-FDMA signals, which are generated by applying block-processing FTN to signals output from the transmission signal generating section 502, and outputs these signals.

Note that the FTN transmission processing section 503 has only to be structured to be able to generate and output SC-FDMA signals using block-processing FTN, and the FTN transmission processing section 300, which has been described with the above embodiment, may be used. Also, the FTN transmission processing section 503 may be structured to be capable of outputting normal SC-FDMA signals (signals acquired by using normal OFDM symbols (OFDM/OQAM symbols) in DFT-precoded OFDM) by not applying FTN.

The SC-FDMA signals that are output from the transmitting/receiving section 503 are transmitted to the radio base station 10 by the transmitting/receiving sections 203.

Note that the control section 601 of the radio base station 10 may be structured to control the user terminal 20 to time-division-multiplex (TDM) transmission signals (SC-FDMA signals) over a first radio resource region (orthogonal multiplexing part), where DFT-precoded OFDM symbols are multiplexed at a symbol rate equal to the Nyquist rate or less, in a given time region and/or frequency region, and a second radio resource region (non-orthogonal multiplexing part), where DFT-precoded OFDM symbols are arranged in the above given the time region and/or frequency region by using block-processing FTN.

To be more specific, the control section 601 of the radio base station 10 may be structured to execute control so that information related to the resources allocated in time division multiplexing is generated reported in a downlink control channel (PDCCH, EPDCCH) or through higher layer signaling (for example, RRC signaling, broadcast signals). As for the information about the resources to be allocated in time division multiplexing, for example, symbol locations in the orthogonal multiplexing part, subcarrier locations where reference signals are multiplexed in the orthogonal multiplexing part, and/or subcarrier locations corresponding respectively to a plurality of antennas (or antenna ports) in the orthogonal multiplexing part may be generated.

In this case, the control section 501 of the user terminal may control the transmission signal generating section 502 and the FTN transmission processing section 503 to time-division-multiplex (TDM) the transmission signals over the orthogonal multiplexing part and the non-orthogonal multiplexing part based on the information related to the resources to be allocated in time division multiplexing. The control section 501 preferably executes control so that signals to be communicated with high quality are mapped to the orthogonal multiplexing part. For example, the control section 501 may preferably execute control so that reference signal symbols are multiplexed in the orthogonal multiplexing part. Note that the control section 501 may execute control so that data signals, control signals and so on, output from the transmission signal generating section 502, are mapped to the orthogonal multiplexing part as information symbols (data symbols, control information symbols and so on).

Also, the control section 601 of the radio base station 10 may determine the symbol locations and subcarriers locations in the orthogonal multiplexing part and the non-orthogonal multiplexing part, and control the FTN reception processing section 602 to execute or not to execute receiving processes (demapping, interference cancellation and so on) for the received signals as DFT-precoded OFDM signals to use block-processing FTN. For example, a structure may be employed here in which signals that correspond to the orthogonal multiplexing part are not identified as SC-FDMA signals using block-processing FTN, but are identified as SC-FDMA signals generated by using normal OFDM symbols (OFDM/OQAM symbols) in DFT-precoded OFDM and subjected to receiving processes.

Also, based on the results of channel estimation executed based on the reference signals, the channel state estimation section 603 of the radio base station 10 may execute channel estimation for radio resources apart from the radio resources where the reference signals are allocated. For example, after having performed channel estimation in each subcarrier location along the frequency direction with respect to the orthogonal multiplexing part, the channel state estimation section 603 can perform channel estimation in each subcarrier and each symbol location along the time direction with respect to the non-orthogonal multiplexing part.

To be more specific, the channel state estimation section 603 of the radio base station 10 can, for example, interpolate the channel response in each subcarrier location in the frequency domain (for example, by way of weighted in-phase addition), and estimate the channel response of each subcarrier location. Then, the channel state estimation section 603 can interpolate the channel response of each subcarrier location in the orthogonal multiplexing part in a given subframe and in the orthogonal multiplexing part in the next subframe following the given subframe, and estimate the channel state pertaining to each symbol location in the time domain.

**Claims**

1. A user terminal (20) comprising:

   a transmission processing section (503) configured to generate an SC-FDMA, Single Carrier Frequency Division Multiple Access, signal by:

   dividing (304) $N_{Fr}$ symbols of a given time region of an input signal into $N_{blk}$ blocks each comprising M symbols, where M is the DFT size, the input signal having a symbol rate equal to or lower than a Nyquist rate of the input signal;
   subjecting (304) each of $N_{blk}+z$ blocks, where z>0, of M symbols to OQAM, Offset Quadrature Amplitude Modulation, mapping; and
   multiplexing (305) the $N_{blk}+z$ OQAM-mapped blocks such that the $N_{blk}+z$ blocks of M symbols each, are mapped in said time region, by partially overlapping adjacent blocks in the time domain; and subjecting the resulting $N_{blk}$ blocks of M symbols to SC-FDMA generation; and

   a transmission section (203) configured to transmit the SC-FDMA signal to a radio base station.

2. The user terminal (20) according to claim 1, wherein the transmission processing section (503) is configured to generate the SC-FDMA signal by furthermore:

   converting (306) the $N_{blk}$ blocks into frequency domain signals of M subcarriers, on a per block basis, through an M-sample DFT;
   mapping (307) the frequency domain signals to a frequency band that is allocated to the user terminal; and
   generating (308) a time domain signal by applying an IFFT process to the frequency-mapped frequency domain signals.

3. The user terminal (20) according to claim 1 or claim 2, wherein, when the OQAM-mapped blocks are multiplexed, the symbol timings are synchronized between different blocks.

4. A radio base station (10) comprising:

a receiving section (103) configured to receive an SC-FDMA, Single Carrier Frequency Division Multiple Access, signal; and
a reception processing section (400) configured to repeat a process of estimating (411) an interfering symbol that interferes with each symbol of the SC-FDMA signal and subtracting (412) the interfering symbol for each symbol from the SC-FDMA signal, each symbol representing a bit of the SC-FDMA signal,
wherein the SC-FDMA signal is generated by:

dividing (304) $N_{Fr}$ symbols of a given time region of an input signal into $N_{blk}$ blocks each comprising M symbols, where M is the DFT size, the input signal having a symbol rate equal to or lower than a Nyquist rate of the input signal;
subjecting (304) each of $N_{blk}+z$ blocks, where z>0, of M symbols to OQAM, Offset Quadrature Amplitude Modulation, mapping; and
multiplexing (305) the $N_{blk}+z$ OQAM-mapped blocks such that the $N_{blk}+z$ blocks of M symbols each, are mapped in said time region, by partially overlapping adjacent blocks in the time domain, and subjecting the resulting Nblk blocks of M symbols to SC-FDMA generation; and

wherein the reception processing section (602) is configured to estimate (411) the interfering symbol that interferes with each symbol of the SC-FDMA signal by:

calculating (406) an a-posteriori log-likelihood ratio, LLR, of each bit of the received signal;
deinterleaving (407) the LLR of each bit of the received signal;
channel decoding (408) the deinterleaved bits of the received signal, to output a-posteriori LLRs of information bits and parity bits of the output signal;
interleaving (409) the a-posteriori LLRs output from the channel decoding;
generating (410) a soft decision estimation value for each symbol after OQAM mapping, by using the interleaved a-posteriori LLRs; and
generating (411), for each symbol, a soft decision symbol estimation value of a symbol that may interfere with the symbol, taking into account the overlap of symbols,

wherein, after a predetermined number of iterations of estimating the interfering symbol that interferes with each symbol of the SC-FDMA signal and subtracting the interfering symbol for each symbol from the SC-FDMA signal, the reception processing section (400) is configured to subject the channel decoding output to a hard decision and output the decoded information bits and parity bits as the transmitted bit sequence of the input signal.

5. The radio base station (10) according to claim 4, wherein the reception processing section (400) is configured to convert (402) the SC-FDMA signal into a frequency domain signal, extract (403) a desired signal in the frequency domain, perform (404) an equalization process in the frequency domain, and perform (405) a conversion into a time domain signal, prior to the repeated estimating an interfering symbol that interferes with each symbol of the SC-FDMA signal and subtracting the interfering symbol for each symbol from the SC-FDMA signal.

6. The radio base station (10) according to claim 4, further comprising a channel response estimation section (603) configured to estimate a channel response based on a reference signal symbol included in the SC-FDMA signal, wherein the reception processing section (400) is configured to perform the equalization process in the frequency domain and calculate the LLR of each bit based on the channel response.

7. The radio base station (10) according to claim 4, wherein the channel response estimation section (603) is configured to estimate the channel response based on the reference signal symbol included in the SC-FDMA signal and the soft decision symbol estimation values calculated from the LLR of each bit.

8. A radio communication method in a user terminal that communicates with a radio base station, the radio communication method comprising the steps of:

generating an SC-FDMA, Single Carrier Frequency Division Multiple Access, signal by:

dividing (304) $N_{Fr}$ symbols of a given time region of an input signal into $N_{blk}$ blocks each comprising M symbols, where M is the DFT size, the input signal having a symbol rate equal to or lower than a Nyquist rate of the input signal;

subjecting (304) each of $N_{blk}$+z blocks, where z>0, of M symbols to OQAM, Offset Quadrature Amplitude Modulation, mapping; and

multiplexing (305) the $N_{blk}$+z OQAM-mapped blocks such that the $N_{blk}$+z blocks of M symbols each, are mapped in said time region, by partially overlapping adjacent blocks in the time domain; and subjecting the resulting Nblk blocks of M symbols to SC-FDMA generation; and

transmitting the SC-FDMA signal to the radio base station.

9. A radio communication system in which a radio base station (10) and a user terminal (20) communicate with each other, the user terminal being a user terminal according to claim 1.

**Patentansprüche**

1. Benutzerendgerät (20), das umfasst:
eine Übertragungsverarbeitungsabschnitt (503), der dazu konfiguriert ist, ein SC-FDMA-, Single-Carrier-Frequency-Division-Multiple Access-Signal, zu erzeugen durch:

Aufteilen (304) von $N_{Fr}$ Symbolen eines gegebenen Zeitbereichs eines Eingangssignals in $N_{blk}$ Blöcke, die jeweils M Symbole umfassen, wobei M die DFT-Größe ist,
wobei das Eingangssignal eine Symbolrate gleich wie oder kleiner als eine Nyquist-Rate des Eingangssignals aufweist;
Unterwerfen (304) jedes der $N_{blk}$+z Blöcke, wobei z>0, von M Symbolen einer OQAM-, Offset-Quadrature-Amplitude-Modulation-Zuordnung; und
Multiplexen (305) der $N_{blk}$+z OQAM-zugeordneten Blöcke derart, dass die $N_{blk}$+z Blöcke von jeweils M Symbolen in dem Zeitbereich durch teilweises Überlappen benachbarter Blöcke in der Zeitdomäne zugeordnet werden; und
Unterwerfen der resultierenden $N_{blk}$ Blöcke von M Symbolen einer SC-FDMA-Erzeugung; und
einen Übertragungsabschnitt (203), der dazu konfiguriert ist, das SC-FDMA-Signal zu einer Funkbasisstation zu übertragen.

2. Benutzerendgerät (20) nach Anspruch 1, wobei der Übertragungsverarbeitungsabschnitt (503) dazu konfiguriert ist, das SC-FDMA-Signal zu erzeugen durch weiter:

Umwandeln (306) der $N_{blk}$ Blöcke in Frequenzdomänensignale von M Unterträgern auf einer blockweisen Basis durch eine M-Abtastungs-DFT;
Zuweisen (307) der Frequenzdomänensignale zu einem Frequenzband, das dem Benutzerendgerät zugeordnet ist; und
Erzeugen (308) eines Zeitdomänensignals durch Anwenden eines IFFT-Prozesses an die frequenzzugewiesenen Frequenzdomänensignale.

3. Benutzerendgerät (20) nach Anspruch 1 oder Anspruch 2, wobei, wenn die OQAMzugewiesenen Blöcke gemultiplext werden, die Symbol-Timings zwischen unterschiedlichen Blöcken synchronisiert sind.

4. Funkbasisstation (10), die umfasst:

einen Empfangsabschnitt (103), der dazu konfiguriert ist, ein SC-FDMA-, Single-Carrier-Frequency-Division-Multiple Access-Signal, zu empfangen; und
einen Empfangsverarbeitungsabschnitt (400), der dazu konfiguriert ist, einen Prozess (411) des Schätzens eines interferierenden Symbols zu wiederholen, das mit jedem Symbol des SC-FDMA-Signals interferiert, und Subtrahieren (412) des interferierenden Symbols für jedes Symbol von dem SC-FDMA-Signal, wobei jedes Symbol ein Bit des SC-FDMA-Signals darstellt,
wobei das SC-FDMA-Signal erzeugt wird durch:

Aufteilen (304) von $N_{Fr}$ Symbolen eines gegebenen Zeitbereichs eines Eingangssignals in $N_{blk}$ Blöcke, die jeweils M Symbole umfassen, wobei M die DFT-Größe ist,

wobei das Eingangssignal eine Symbolrate gleich wie oder kleiner als eine Nyquist-Rate des Eingangssignals aufweist;

Unterwerfen (304) jedes der $N_{blk}$+z Blöcke, wobei z>0, von M Symbolen einer OQAM-, Offset-Quadrature-Amplitude-Modulation-Zuordnung; und

Multiplexen (305) der $N_{blk}$+z OQAM-zugeordneten Blöcke derart, dass die $N_{blk}$+z Blöcke vpn jeweils M Symbolen in dem Zeitbereich durch teilweises Überlappen benachbarter Blöcke in der Zeitdomäne zugeordnet werden; und

Unterwerfen der resultierenden $N_{blk}$ Blöcke von M Symbolen einer SC-FDMA-Erzeugung; und

wobei der Empfangsverarbeitungsabschnitt (602) dazu konfiguriert ist, das interferierende Symbol, das mit jedem Symbol des SC-FDMA-Signals interferiert, zu schätzen (411) durch:

> Berechnen (406) eines aposteriorischen Log-Wahrscheinlichkeitsverhältnisses, LLR, jedes Bits des empfangenen Signals;
>
> Entschachteln (407) des LLR jedes Bits des empfangenen Signals;
>
> Kanaldecodieren (408) der entschachtelten Bits des empfangenen Signals, um aposteriorische LLRs von Informationsbits und Paritätsbits des ausgegebenen Signals auszugeben;
>
> Verschachteln (409) der aposteriorischen LLRs, die von dem Kanaldekodieren ausgegeben werden;
>
> Erzeugen (410) eines Soft-Entscheidungsschätzwertes für jedes Symbol nach OQAM-Zuweisung durch Verwenden der verschachtelten aposteriorischen LLRs; und
>
> Erzeugen (411) für jedes Symbol eines Soft-Entscheidungssymbolschätzwertes eines Symbols, das mit dem Symbol interferieren kann, unter Berücksichtigung der Überlappung von Symbolen,
>
> wobei, nach einer vorbestimmten Anzahl von Iterationen des Schätzens des interferierenden Symbols, das mit jedem Symbol des SC-FDMA-Signals interferiert, und Subtrahieren des interferierenden Symbols für jedes Symbol von dem SC-FDMA-Signal, der Empfangsverarbeitungsabschnitt (400) dazu konfiguriert ist, den Kanaldekodierungsausgang einer Hard-Entscheidung zu unterwerfen und die dekodierten Informationsbits und Paritätsbits als die übertragene Bitsequenz des Eingangssignals auszugeben.

5. Funkbasisstation (10) nach Anspruch 4, wobei der Empfangsverarbeitungsabschnitt (400) dazu konfiguriert ist, das SC-FDMA-Signal in ein Frequenzdomänensignal umzuwandeln (402), ein gewünschtes Signal in der Frequenzdomäne zu extrahieren (403), einen Entzerrungsprozess in der Frequenzdomäne auszuführen (404) und eine Umwandlung in ein Zeitdomänensignal vor dem wiederholten Schätzen eines interferierenden Symbols, das mit jedem Symbol des SC-FDMA-Signals interferiert, auszuführen (405) und das interferierende Symbol für jedes Symbol von dem SC-FDMA-Signal zu subtrahieren.

6. Funkbasisstation (10) nach Anspruch 4, die weiter einen Kanalantwortschätzungsabschnitt (603) umfasst, der dazu konfiguriert ist, eine Kanalantwort basierend auf einem Referenzsignalsymbol, das in dem SC-FDMA-Signal beinhaltet ist, zu schätzen,

wobei der Empfangsverarbeitungsabschnitt (400) dazu konfiguriert ist, den Entzerrungsprozess in der Frequenzdomäne auszuführen und das LLR jedes Bits basierend auf der Kanalantwort zu berechnen.

7. Funkbasisstation (10) nach Anspruch 4, wobei der Kanalantwortschätzungsabschnitt (603) dazu konfiguriert ist, die Kanalantwort basierend auf dem Referenzsignalsymbol, das in dem SC-FDMA-Signal beinhaltet ist, und den Soft-Entscheidungssymbolschätzwerten, die aus dem LLR jedes Bits berechnet werden, zu schätzen.

8. Funkkommunikationsverfahren in einem Benutzerendgerät, das mit einer Funkbasisstation in Kommunikation steht, wobei das Funkkommunikationsverfahren die Schritte umfasst des:

Erzeugens eines SC-FDMA-, Single-Carrier-Frequency-Division-Multiple-Access-Signals durch:

> Aufteilen (304) von $N_{Fr}$ Symbolen eines gegebenen Zeitbereichs eines Eingangssignals in $N_{blk}$ Blöcke, die jeweils M Symbole umfassen, wobei M die DFT-Größe ist,
>
> wobei das Eingangssignal eine Symbolrate gleich wie oder kleiner als eine Nyquist-Rate des Eingangssignals aufweist;
>
> Unterwerfen (304) jedes der $N_{blk}$+z Blöcke, wobei z>0, von M Symbolen einer OQAM-, Offset-Quadrature-Amplitude-Modulation-Zuordnung; und
>
> Multiplexen (305) der $N_{blk}$+z OQAM-zugeordneten Blöcke derart, dass die $N_{blk}$+z Blöcke von jeweils M Symbolen in dem Zeitbereich durch teilweises Überlappen benachbarter Blöcke in der Zeitdomäne zugeordnet werden; und
>
> Unterwerfen der resultierenden $N_{blk}$ Blöcke von M Symbolen einer SC-FDMA-Erzeugung; und

Übertragen des SC-FDMA-Signals zu der Funkbasisstation.

9. Funkkommunikationssystem, in dem eine Funkbasisstation (10) und ein Benutzerendgerät (20) miteinander in Kommunikation stehen, wobei das Benutzerendgerät ein Benutzerendgerät nach Anspruch 1 ist.

**Revendications**

1. Terminal utilisateur (20) comprenant :

   une section de traitement de transmission (503) configurée pour générer un signal d'Accès Multiple par Répartition en Fréquence à Porteuse Unique, SC-FDMA, par :

   une division (304) de $N_{Fr}$ symboles d'une région temporelle donnée d'un signal d'entrée en $N_{blk}$ blocs comprenant chacun M symboles, où M est la taille de DFT, le signal d'entrée présentant un débit de symboles égal ou inférieur à un débit de Nyquist du signal d'entrée ;
   une soumission (304) de chacun des $N_{blk}+z$ blocs, où z>0, de M symboles à un mappage par Modulation d'Amplitude en Quadrature Décalée, OQAM ; et
   un multiplexage (305) des $N_{blk}+z$ blocs mappés-OQAM de telle sorte que les $N_{blk}+z$ blocs de M symboles chacun sont mappés dans ladite région temporelle, en chevauchant partiellement des blocs adjacents dans le domaine temporel ; et
   une soumission des $N_{blk}$ blocs résultants de M symboles à une génération SC-FDMA; et

   une section de transmission (203) configurée pour transmettre le signal SC-FDMA à une station de base radio.

2. Terminal utilisateur (20) selon la revendication 1, dans lequel la section de traitement de transmission (503) est configurée pour générer le signal SC-FDMA par en outre :

   une conversion (306) des $N_{blk}$ blocs en signaux de domaine fréquentiel de M sous-porteuses, sur une base par bloc, via une DFT de M échantillons ;
   un mappage (307) des signaux de domaine fréquentiel sur une bande de fréquence qui est allouée au terminal utilisateur ; et
   une génération (308) d'un signal de domaine temporel en appliquant un processus IFFT aux signaux de domaine fréquentiel mappés sur fréquence.

3. Terminal utilisateur (20) selon la revendication 1 ou la revendication 2, dans lequel, lorsque les blocs mappés-OQAM sont multiplexés, les cadencements de symboles sont synchronisés entre différents blocs.

4. Station de base radio (10) comprenant :

   une section de réception (103) configurée pour recevoir un signal d'Accès Multiple par Répartition en Fréquence à Porteuse Unique, SC-FDMA; et
   une section de traitement de réception (400) configurée pour répéter un processus d'estimation (411) d'un symbole interférant qui interfère avec chaque symbole du signal SC-FDMA et de soustraction (412) du symbole interférant pour chaque symbole à partir du signal SC-FDMA, chaque symbole représentant un bit du signal SC-FDMA,
   dans laquelle le signal SC-FDMA est généré par :

   une division (304) de $N_{Fr}$ symboles d'une région temporelle donnée d'un signal d'entrée en $N_{blk}$ blocs comprenant chacun M symboles, où M est la taille de DFT, le signal d'entrée présentant un débit de symboles égal ou inférieur à un débit de Nyquist du signal d'entrée ;
   une soumission (304) de chacun des $N_{blk}+z$ blocs, où z>0, de M symboles à un mappage par Modulation d'Amplitude en Quadrature Décalée, OQAM ; et
   un multiplexage (305) des $N_{blk}+z$ blocs mappés-OQAM de telle sorte que les $N_{blk}+z$ blocs de M symboles chacun sont mappés dans ladite région temporelle, en chevauchant partiellement des blocs adjacents dans le domaine temporel ; et
   une soumission des Nblk blocs résultants de M symboles à une génération SC-FDMA; et

dans laquelle la section de traitement de réception (602) est configurée pour estimer (411) le symbole interférant qui interfère avec chaque symbole du signal SC-FDMA par :

> un calcul (406) d'un logarithme de rapport de vraisemblance, LLR, a posteriori de chaque bit du signal reçu ;
> un désentrelacement (407) du LLR de chaque bit du signal reçu ;
> un décodage de canal (408) des bits désentrelacés du signal reçu, pour délivrer en sortie des LLR a posteriori de bits d'informations et de bits de parité du signal de sortie ;
> un entrelacement (409) des LLR a posteriori délivrés en sortie à partir du décodage de canal ;
> une génération (410) d'une valeur d'estimation à décision pondérée pour chaque symbole après le mappage OQAM, en utilisant les LLR a posteriori entrelacés ; et
> une génération (411), pour chaque symbole, d'une valeur d'estimation de symbole à décision pondérée d'un symbole qui peut interférer avec le symbole, en prenant en compte le chevauchement de symboles,

dans laquelle, après un nombre prédéterminé d'itérations d'estimation du symbole interférant qui interfère avec chaque symbole du signal SC-FDMA et de soustraction du symbole interférant pour chaque symbole à partir du signal SC-FDMA, la section de traitement de réception (400) est configurée pour soumettre la sortie de décodage de canal à une décision dure et délivrer en sortie les bits d'informations et les bits de parité décodés en tant que la séquence de bits transmise du signal d'entrée.

5. Station de base radio (10) selon la revendication 4, dans laquelle la section de traitement de réception (400) est configurée pour convertir (402) le signal SC-FDMA en un signal de domaine fréquentiel, extraire (403) un signal souhaité dans le domaine fréquentiel, effectuer (404) un processus d'égalisation dans le domaine fréquentiel, et effectuer (405) une conversion en un signal de domaine temporel, avant l'estimation répétée d'un symbole interférant qui interfère avec chaque symbole du signal SC-FDMA et la soustraction du symbole interférant pour chaque symbole à partir du signal SC-FDMA.

6. Station de base radio (10) selon la revendication 4, comprenant en outre une section d'estimation de réponse de canal (603) configurée pour estimer une réponse de canal sur la base d'un symbole de signal de référence inclus dans le signal SC-FDMA,
dans laquelle la section de traitement de réception (400) est configurée pour effectuer le processus d'égalisation dans le domaine fréquentiel et calculer le LLR de chaque bit sur la base de la réponse de canal.

7. Station de base radio (10) selon la revendication 4, dans laquelle la section d'estimation de réponse de canal (603) est configurée pour estimer la réponse de canal sur la base du symbole de signal de référence inclus dans le signal SC-FDMA et des valeurs d'estimation de symbole à décision pondérée calculées à partir du LLR de chaque bit.

8. Procédé de communication radio dans un terminal utilisateur qui communique avec une station de base radio, le procédé de communication radio comprenant les étapes consistant à :

> générer un signal d'Accès Multiple par Répartition en Fréquence à Porteuse Unique, SC-FDMA, par :

>> une division (304) de $N_{Fr}$ symboles d'une région temporelle donnée d'un signal d'entrée en $N_{blk}$ blocs comprenant chacun M symboles, où M est la taille de DFT, le signal d'entrée présentant un débit de symboles égal ou inférieur à un débit de Nyquist du signal d'entrée ;
>> une soumission (304) de chacun des $N_{blk}+z$ blocs, où z>0, de M symboles à un mappage par Modulation d'Amplitude en Quadrature Décalée, OQAM ; et
>> un multiplexage (305) des $N_{blk}+z$ blocs mappés-OQAM de telle sorte que les $N_{blk}+z$ blocs de M symboles chacun sont mappés dans ladite région temporelle, en chevauchant partiellement des blocs adjacents dans le domaine temporel ; et
>> une soumission des Nblk blocs résultants de M symboles à une génération SC-FDMA; et

> transmettre le signal SC-FDMA à la station de base radio.

9. Système de communication radio dans lequel une station de base radio (10) et un terminal utilisateur (20) communiquent l'un avec l'autre, le terminal utilisateur étant un terminal utilisateur selon la revendication 1.

FIG.1

FIG.2

W1    W2

NYQUIST
INTERVAL

TIME

FIG.3A

INTER-SYMBOL
INTERFERENCE AND
INTER-SUBCARRIER
INTERFERENCE ARE
PRODUCED

W1   W3      W2   W4

NYQUIST
INTERVAL

TIME

FIG.3B

FFT BLOCK
(OFDM SYMBOL)

OFDM SYMBOL
INTERVAL

TIME

OFDM
(OFDM/OQAM)

FTN

FTN SYMBOL
INTERVAL

PLACE WHERE ISI
IS PRODUCED

FIG.4

EP 3 116 151 B1

|  | METHOD TO USE INVERSE FAST FRACTIONAL FT (IFFrFT) | METHOD TO USE PLURALITY OF IFFTS | METHOD TO PERFORM MAPPING CONVERSION OF FTN SYMBOL INTO OFDM/OQAM SYMBOL |
|---|---|---|---|
| GENERATION METHOD | DIRECTLY GENERATE FTN SYMBOLS THAT ARE SUBJECT TO INTER-SYMBOL INTERFERENCE | GENERATE BY ADDING TIME DOMAIN SIGNAL HAVING BEEN SUBJECTED TO IFFT, TO OFDM/OQAM (OFDM) SYMBOL | PROJECT FTN SYMBOL ON OFDM/OQAM SYMBOL AND APPLY IFFT |
| VOLUME OF CALCULATION | MEDIUM | LARGE | MEDIUM |
| FLEXIBILITY OF IMPLEMENTATION AGAINST CHANGES IN FTN MULTIPLEXING EFFICIENCY | KERNEL FUNCTION IN IFFrFT NEEDS TO BE CHANGED | NUMBER OF IFFTS NEEDS TO BE CHANGED | PROJECTION COEFFICIENT TABLE NEEDS TO BE CHANGED |
| FLEXIBILITY OF SWITCHING WITH ORTHOGONAL OFDM | NOT FLEXIBLE | NOT FLEXIBLE | FLEXIBLE SWITCHING IS POSSIBLE |

FIG.5

EP 3 116 151 B1

TIME

OFDM SYMBOL INTERVAL → $T$

OFDM/OQAM SYMBOL INTERVAL → $T/2$

FREQUENCY

● ORIGINAL OFDM SYMBOL IN-PHASE COMPONENT

○ ORIGINAL OFDM SYMBOL QUADRATURE COMPONENT

FIG.6

## 300

EP 3 116 151 B1

TRANSMISSION
BIT

| 301 | 302 | 303 |
|---|---|---|
| CHANNEL CODING SECTION | INTERLEAVER | MODULATION MAPPING SECTION |

| 304 | 305 | 306 |
|---|---|---|
| BLOCK PROCESS/ OQAM MAPPING SECTION | FTN MAPPING SECTION | DFT SECTION |

| 307 | 308 | 309 |
|---|---|---|
| SUBCARRIER MAPPING SECTION | MULTI-CARRIER MODULATION (IFFT) SECTION | TRANSMISSION FILTER (IOTA FILTER) |

TRANSMISSION
SIGNAL

FIG.7

EP 3 116 151 B1

$\tau_0$: DFT BLOCK LENGTH

FIG.8

FIG.9

FIG.10

FIG.11

FIG.12

FIG.13

EP 3 116 151 B1

FIG.14

NUMBER OF SYMBOLS IN 1 SUBFRAME: $N_{Fr}$

ORIGINAL SC
FDMA SYMBOL

DIVIDED INTO $N_{blk}$ BLOCKS

BLOCKING

M SYMBOLS

COMPRESSING IN
TIME DOMAIN BY
ALLOWING
SYMBOLS TO
OVERLAP EACH
OTHER (FTN)

INTER-SYMBOL
INTERFERENCE

REBLOCKING

FIG.15  DFT PROCESS IN THIS BLOCK UNIT

EP 3 116 151 B1